## Europäisches Patentamt

## European Patent Office

## Office européen des brevets

(19)

(11) Veröffentlichungsnummer: **0 060 370**
**B1**

(12) **EUROPÄISCHE PATENTSCHRIFT**

(45) Veröffentlichungstag der Patentschrift:
10.07.85

(21) Anmeldenummer: **81810091.9**

(22) Anmeldetag: **12.03.81**

(51) Int. Cl.⁴: **A 21 C 9/04**, A 21 D 13/08

(54) Zubringerverfahren und Vorrichtung zur Durchführung des Verfahrens.

(43) Veröffentlichungstag der Anmeldung:
22.09.82 Patentblatt 82/38

(45) Bekanntmachung des Hinweises auf die Patenterteilung:
10.07.85 Patentblatt 85/28

(84) Benannte Vertragsstaaten:
AT BE CH DE FR GB IT LI LU NL SE

(56) Entgegenhaltungen:
DE - B - 1 190 378
DE - B - 1 192 918
DE - B - 1 223 677
FR - A - 338 465
FR - A - 2 428 403
US - A - 1 708 062
US - A - 3 912 433

(73) Patentinhaber: **Seewer AG, Maschinenfabrik, Helmiswilstrasse 42, CH-3400 Burgdorf, Kanton Bern (CH)**

(72) Erfinder: **Schrauf, Karl, Kapfstrasse 53, Gisingen b. Feldkirch Vorarlberg (AT)**

(74) Vertreter: **Bovard, Fritz Albert et al, Bovard & Cie Patentanwälte VSP Optingenstrasse 16, CH-3000 Bern 25 (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Beschreibung

Die vorliegende Erfindung bezieht sich auf ein Verfahren sowie eine Vorrichtung zum automatischen Zubringen von ersten Erzeugnissen auf von einem Transportmittel transportierte zweite Erzeugnisse, insbesondere zum Zuführen von Schokoladestäbchen auf Teigblättchen.

Bisher wurden bei der Herstellung von mit Schokoladestäbchen gefüllten Brötchen, sogenannten »Pain au Chocolat«, die Schokoladestäbchen von Hand auf den Teig gebracht. Dieses Verfahren ist sehr zeitraubend und arbeitsintensiv. Das Aufbringen von flüssiger Schokolademasse ist ungeeignet, da beim Backen die Schokoladefüllung aus der Teigumhüllung austreten kann.

Aus der Deutschen Auslegeschrift 1 190 378 ist eine Vorrichtung zum Entnehmen von stabförmigen Gegenständen aus einem Vorratsbehälter mittels eines Drehkolbens und ihre Abgabe an ein Förderwerk zur Weitergabe an eine Einrollvorrichtung vorbekannt. Die stabförmigen Gegenstände sind dabei in einem oberhalb des Förderwerkes angeordneten Behälter eingebracht. Unterhalb des Behälters ist ein den Boden desselben bildendes, mit einer Zuführöffnung versehenes Zuführorgan vorgesehen. Das Zuführorgan wird durch Antriebsmittel so in Bewegung versetzt, daß sich die Zuführöffnung zwischen den Wänden des Behälters hin- und herbewegt und die stabförmigen Gegenstände vom ersten Behälter durch die Zuführöffnung auf das Förderwerk fallen. Mit dieser bekannten Vorrichtung ist eine sichere Zuführung der stabförmigen Gegenstände vom Behälter durch die Zuführöffnung auf das Förderwerk nur dann möglich, wenn die stabförmigen Gegenstände einen kreisförmigen Querschnitt aufweisen und horizontal ausgerichtet sind. Mit dieser vorbekannten Vorrichtung ist es jedoch schwierig, Gegenstände mit z. B. ovalem Querschnitt, vom ersten Behälter durch die Zuführöffnung zu befördern, insbesondere wenn sich die Gegenstände in verschiedener Lage befinden.

Es ist daher eine Aufgabe der vorliegenden Erfindung, ein Verfahren und eine Vorrichtung zum automatischen Zubringen von ersten Erzeugnissen auf von einem Transportmittel zugeführte zweite Erzeugnisse, insbesondere Schokoladestäbchen mit ovalem Querschnitt auf Teigblättchen zu schaffen, wobei ein sicheres Zuführen der ersten Erzeugnisse in einer bestimmten Ausrichtung auf jedes vorbeitransportierte zweite Erzeugnis erfolgen soll.

Dies wird erfindungsgemäß erzielt durch die kennzeichnenden Merkmale der unabhängigen Patentansprüche 1 und 4.

Gemäß einer weiteren Aufgabe soll eine Beschädigung der ersten Erzeugnisse in einem Zuführbehälter vermieden werden. Dies wird dadurch erzielt, daß die Wände des Behälters gefedert angeordnet sind. Im folgenden wird anhand der Zeichnung ein Ausführungsbeispiel der Erfindung näher beschrieben. Es zeigt

Fig. 1 einen Ausschnitt des Förderbandes der Vorrichtung für den Teig mit einem Teigblättchen und dem aufgebrachten Schokoladestäbchen,

Fig. 2 eine Ansicht der Zubringervorrichtung,

Fig. 3 eine Seitenansicht der Zubringervorrichtung teilweise im Schnitt gemäß Linie III-III der Fig. 2,

Fig. 4 und 5 einen Ausschnitt gemäß Fig. 2 mit dem zylindersektorförmigen Teil unter dem Zuführtrichter in seinen beiden Endlagen,

Fig. 6 und 7 den Blockiermechanismus für die zugeführten Schokoladestäbchen im zylindersektorförmigen Teil, und

Fig. 8 eine graphische Darstellung des Verlaufs des Schlitzes im zylindersektorförmigen Teil zwischen seinen beiden Endlagen.

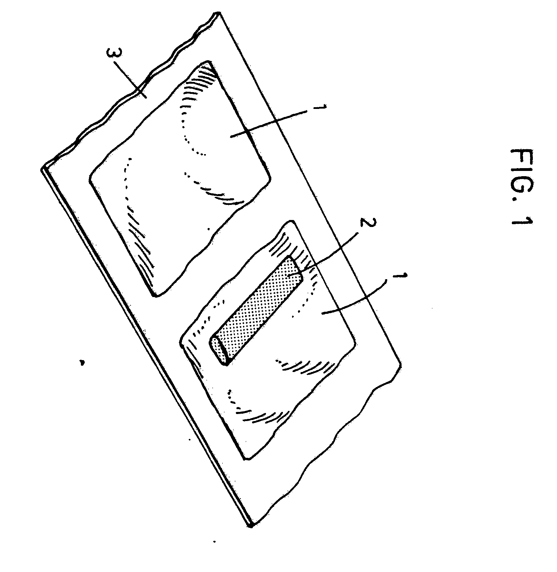

In Fig. 1 ist ein Teigblättchen 1 mit einem durch die nicht dargestellte Zubringervorrichtung aufgebrachten Schokoladestäbchen 2 dargestellt, wobei das Teigblättchen durch ein Transportband 3 gefördert wird. Die Schokoladestäbchen werden quer zum Transportband auf die Teigblättchen aufgebracht.

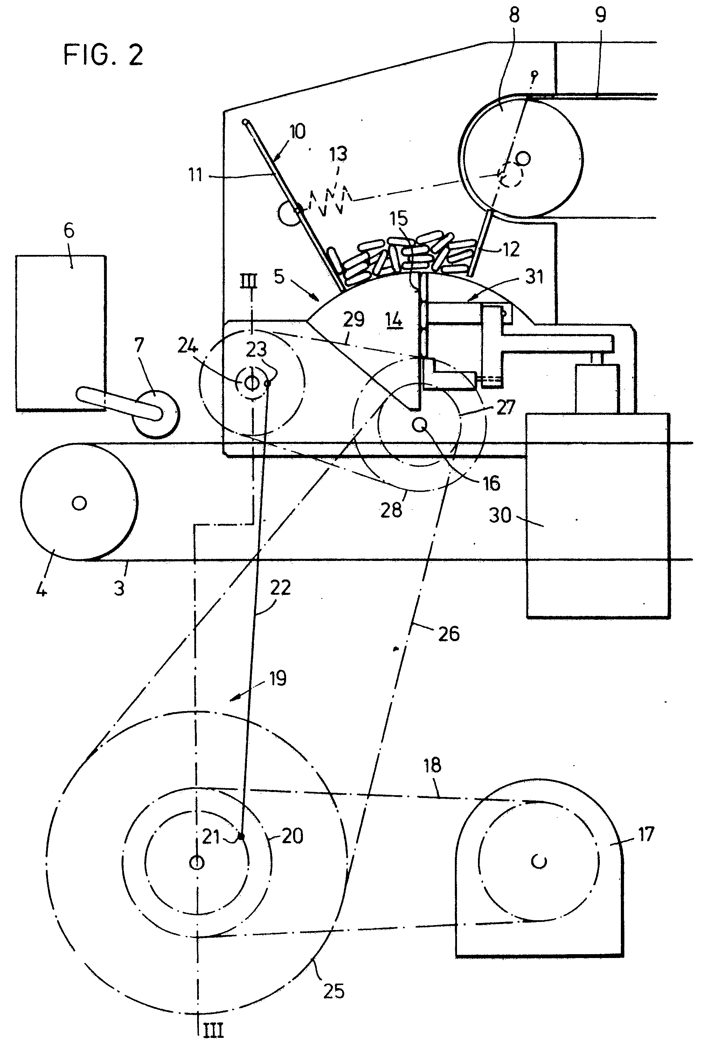

In Fig. 2 sind die zur Erläuterung des Ausführungsbeispieles der Erfindung wesentlichen Teile der Zubringervorrichtung dargestellt. Auf dem über eine erste Umlenkrolle 4 geführten Transportband 3 werden die Teigblättchen unter die Zubringervorrichtung 5 gebracht. Ein Abfühlgerät 6 mit einer auf das Transportband aufgesetzten Rolle 7 erfaßt das Durchlaufen eines Teigblättchens und steuert die Zuführung der Schokoladestäbchen. Die Schokoladestäbchen werden auf einem um eine zweite Umlenkrolle 8 geführten Zuführband 9 zu einem zur Aufnahme der Stäbchen bestimmten Trichter 10 geführt. Die Trichterwände 11 und 12 sind mittels einer Zugfeder 13 gefedert angeordnet, wodurch ein Zerbrechen der im Trichter 10 herum bewegten Schokoladestäbchen 2 verhindert wird. Unterhalb des Trichters 10 ist ein zylindersektorförmiges Zuführorgan 14 angeordnet, das in Richtung seiner Längsachse mit einem durchgehenden Schlitz 15 versehen ist. Das Zuführorgan 14 bildet den Boden des Trichters 10 und ist um seine Längsachse 16 drehbar gelagert.

Das Zuführorgan 14 wird nun, wie nachfolgend beschrieben, so angetrieben, daß es eine Drehbewegung unter dem Trichter 10 ausführt, wobei sich der Schlitz 15 zwischen den beiden Trichterwänden 11 und 12 hin- und herbewegt. Ein Antriebsmotor 17 treibt über eine erste Kette 18 einen Kurbeltrieb 19. Eine mit einem, von der ersten Kette angetriebenen ersten Antriebsrad 20 verbundene Hauptkurbel 21 betätigt eine Schubstange 22. Das der Hauptkurbel entgegengesetzte Ende der Schubstange ist mit einem Exzenterbolzen 23 verbunden, welcher mit einem zweiten Antriebsrad 24 eine Zusatzkurbel bildet. Ein mit dem ersten Antriebsrad 20 konzentrisch angeordnetes drittes Antriebsrad 25 treibt über eine Kette 26 ein viertes Antriebsrad 27, wobei ein konzentrisch mit diesem verbundenes fünftes Antriebsrad 28 über eine Kette 29 die Zusatzkurbel 23, 24 antreibt. Die Antriebsräder 25, 27, 28, 24 bilden ein Übersetzungsgetriebe für die Zusatzkurbel. Der Kurbeltrieb 19 erteilt dem zylindersektorförmigen Zuführorgan 14 eine sinusförmige Bewegung, d. h. der Schlitz 15 würde ohne Zusatzkurbel 23, 24 zwischen seinen, durch die Trichterwände definierten Endlagen, eine sinusförmige Bewegung als Funktion des Drehwinkels der Hauptkurbel 21 ausführen. Wenn die Schubstange 22 im Mittelpunkt des Antriebsrades 24 angreifen würde, so würde der Schlitz 15 zwischen den Wänden 11 und 12 eine sinusförmige Bewegung ausführen. Die Schubstange 22 greift aber am äußeren Ende des Exzenterbolzens 23 an, so daß durch die Zusatzkurbel 23, 24, welche über die Ketten 26 und 29 sowie das vierte und fünfte Antriebsrad 27 und 28 angetrieben wird, dem Zuführorgan 14 und damit dem Schlitz 15 eine gestörte sinusförmige Bewegung erteilt wird.

Insbesondere in den Endlagen der Drehbewegung des Zuführorganes 14 wird ein Bewegungsablauf erzielt, welcher geeignet ist, die unregelmäßig ausgerichteten Schokoladestäbchen in den Schlitz zu bringen.

Ein mit den Zuführorgan 14 verbundener Hubmagnet 30 dient zur Betätigung eines Festhaltemechanismus 31 für die Schokoladestäbchen.

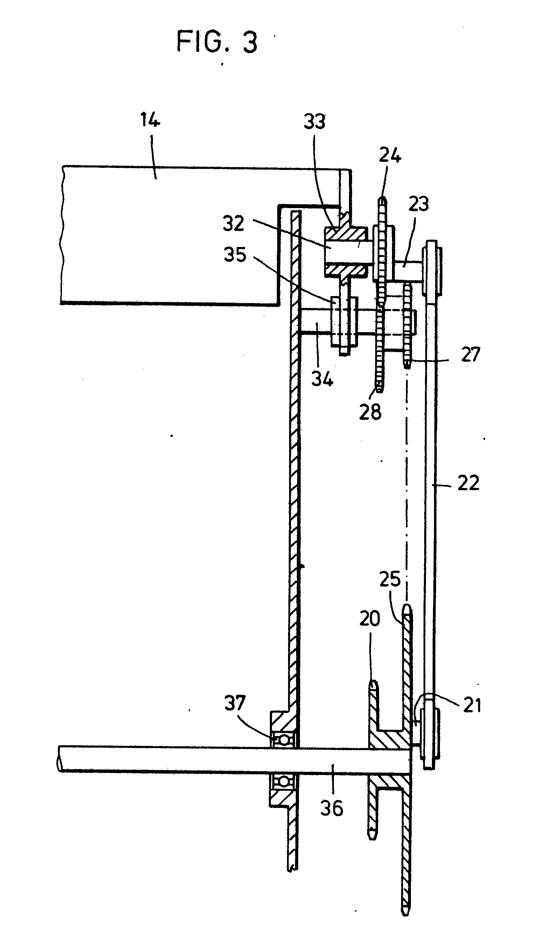

Aus Fig. 3 ist eine Seitenansicht, teilweise im Schnitt gemäß Linie III-III der Fig. 2, ersichtlich. Das zweite Antriebsrad 24 ist mit einer Welle 32 in einem Lager 33 gelagert. Die beiden konzentrisch angeordneten Antriebsräder 27, 28 sind mit einer weiteren Welle 34 in einem Lager 35 gelagert. Die beiden konzentrischen Antriebsräder 20 und 25 sind mit einer Welle 36 in einem Lager 37 gelagert.

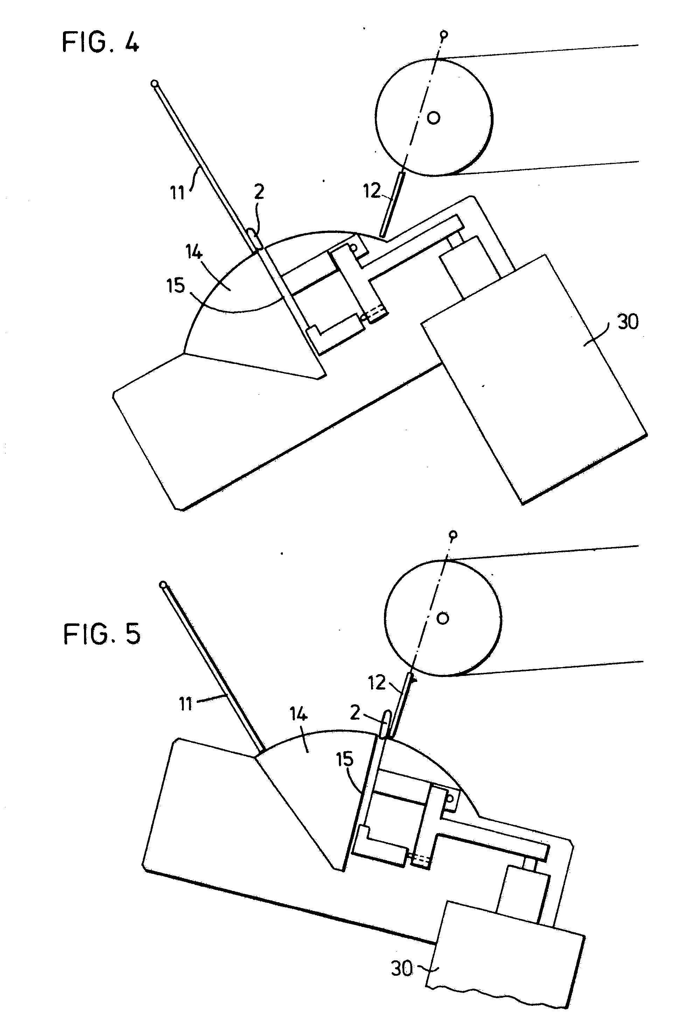

In den Fig. 4 und 5 ist das zylindersektorförmige Zuführorgan 14 in seinen beiden Endlagen dargestellt. Gemäß Fig. 4 befindet sich der Durchtrittsschlitz 15 für die Schokoladestäbchen 2 in seiner, dem gemäß den Fig. 4 und 5, linken Trichterrand 11 benachbarten, und gemäß Fig. 5, in seiner, dem gemäß den Fig. 4 und 5 rechten Trichterrand 12 benachbarten Lage. Die Schokoladestäbchen 2 weisen einen ovalen Querschnitt auf und müssen im Trichter 10 aufgestellt werden, um in den Durchtrittsschlitz gelangen zu können, d. h. die längere Achse des ovalen Querschnittes muß parallel zum Schlitz 15 und die Längsachse der Schokoladestäbchen parallel zum Transportband 3 zu liegen kommen. Dies geschieht vor allem im Bereich der Trichterwände 11 und 12, so daß dort die Bewegung des zylindersektorförmigen Organs einen geeigneten zeitlichen Verlauf aufweisen muß, wie das durch die Zusatzkurbel 23, 24 erzielt wird.

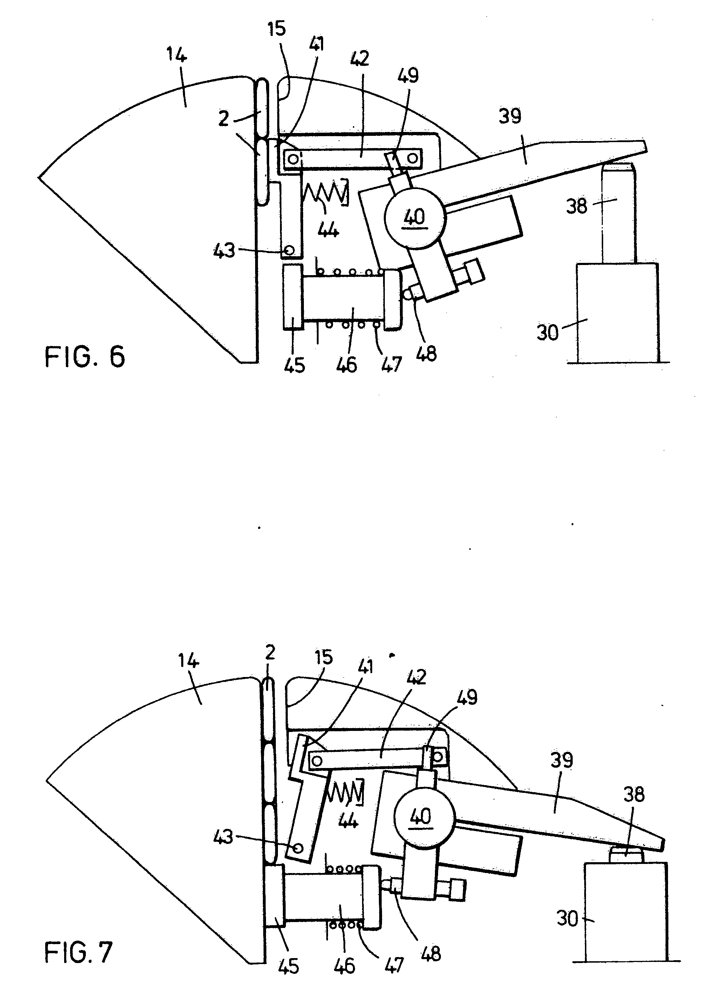

In den Fig. 6 und 7 ist der Festhaltemechanismus 31 für die Schokoladestäbchen 2 im Durchtrittsschlitz 15 dargestellt. Ein Kolben 38 des Hubmagneten 30 wirkt auf einen Betätigungshebel 39 ein. Der um eine Achse 40 drehbar gelagerte Betätigungshebel zieht beim Hinuntergehen des Kolbens 38 einen mit einer Klemmplatte 41 drehbar verbundenen Zwischenhebel 42 zurück. Die um eine Achse 43 drehbare Klemmplatte 41 wird in Zuführstellung gemäß Fig. 6 mit einer Feder 44 gegen ein Schokoladestäbchen 2 gedrückt, wobei das unter dem angedrückten Stäbchen befindliche Stäbchen durch den Schlitz 15 nach unten auf ein Teigblättchen fällt. In Zuführstellung wird ein mit einer Anschlagplatte 45 versehener Zylinder 46 mittels einer Feder 47 weg vom Schlitz 15 gegen einen mit dem Betätigungshebel 39 verbundenen, verstellbaren Anschlagbolzen 48 gedrückt. In der Blockierstellung gemäß Fig. 7 wird die Klemmplatte 41 vom Schlitz 15 weggezogen, indem ein am Betätigungshebel 39 befindlicher Endbolzen 49 den Zwischenhebel 42 in Richtung vom Schlitz wegführt. Der mit dem Betätigungshebel 39 verbundene Anschlagbolzen 48 drückt den Zylinder 46 mit der Anschlagplatte in den Durchgangsschlitz 15 und sperrt die Zuführung von Schokoladestäbchen zum Förderband 3.

Die Steuerung der Zubringervorrichtung 5 erfolgt vom Abfühlgerät 6 aus. Wenn die Abfühlrolle 7 ein Teigblättchen 1 auf dem Förderband 3 erfaßt, so wird die Klemmplatte 41 gegen das zweitunterste Schokoladestäbchen im Schlitz 15 gedrückt, die Anschlagplatte 45 zurückgezogen, so daß ein Stäbchen mit seiner Längsachse senkrecht zur Transportrichtung auf ein Teigblättchen fällt. Voraussetzung für ein lückenloses Beschicken der Teigblättchen mit Schokoladestäbchen ist, daß nach der Abgabe eines Schokoladestäbchens 2 auf das Förderband 3 beim Zurückziehen der Klemmplatte 41 weg vom Schlitz, und beim Hineindrücken der Anschlagplatte 45 in den Schlitz, der Schlitz mit Schokoladestäbchen so gefüllt wird, daß sich, bis zum nächsten Abgabevorgang zumindest ein Schokoladestäbchen zwischen Anschlagplatte 45 und Klemmplatte 41 befindet.

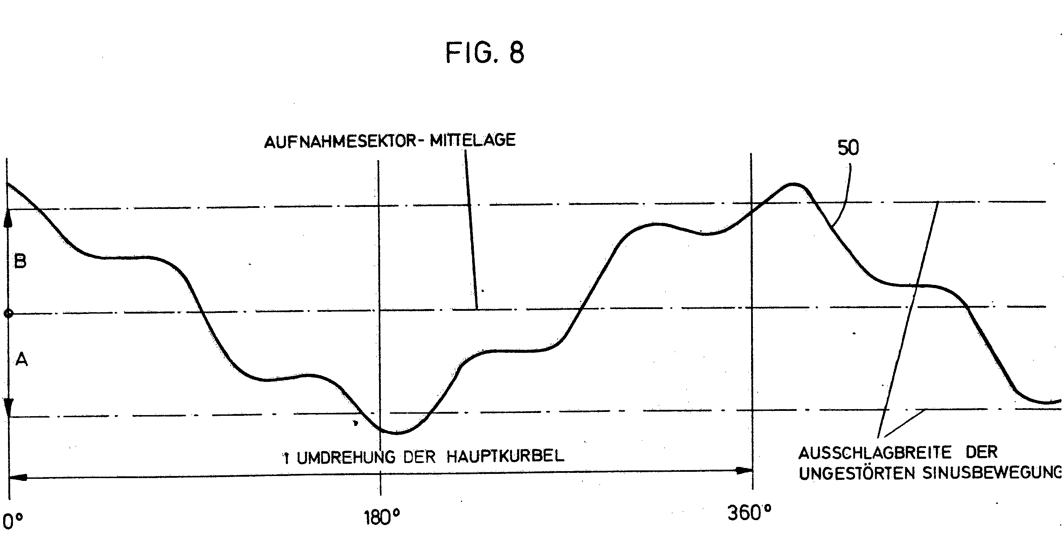

In Fig. 8 ist der Verlauf des Schlitzes 15 zwischen den Trichterwänden 11 und 12 als Funktion des Drehwinkels der Hauptkurbel dargestellt. Die mit 0° bezeichnete Abzisse entspricht der Mittellager des Schlitzes zwischen den Trichterwänden. Die mit A und B angegebenen Ordinatenabschnitte entsprechen den maximalen Auslenkungen des Schlitzes bei einer ungestörten sinusförmigen Bewegung. Infolge der überlagerten Bewegung durch die Zusatzkurbel entsteht der in Fig. 8 dargestellte Bewegungsablauf 50, wobei die Maxima des ungestörten sinusförmigen Ablaufs überschritten werden. Diese gestörte sinusförmige Bewegung garantiert das einwandfreie Füllen des Schlitzes 15 mit im Trichter 10 befindlichen Schokoladestäbchen, wobei die Stäbchen vor allem im Bereich der Trichterwände 11, 12 in den Schlitz 15 gelangen, da dort durch die Störung des sinusförmigen Verlaufs die maximalen Auslenkungen gewissermaßen ruckartig überschritten werden.

## Patentansprüche

1. Verfahren zum automatischen Zubringen von ersten Erzeugnissen (2) auf von einem Transportmittel (3) transportierte zweite Erzeugnisse (1), wobei die ersten Erzeugnisse (2) zu einem oberhalb des Transportmittels (3) angeordneten Behälter (10) zugeführt werden und unterhalb des Behälters (10) ein, den Boden desselben bildendes, mit einer Zuführöffnung (15) versehenes Zuführorgan (14) vorgesehen ist, wobei das genannte Organ (14) durch Antriebsmittel (17, 18, 20, 21, 22, 23, 24, 25, 26, 27, 28) in Bewegung versetzt wird, wobei die Zuführöffnung (15) zwischen Wänden (11, 12) des Behälters (10) hin- und herbewegt und die ersten Erzeugnisse (2) vom Behälter (10) durch die Zuführöffnung (15) auf die zweiten Erzeugnisse (1) zugeführt werden, dadurch gekennzeichnet, daß das Zuführorgan (14) eine gestörte sinusförmige Bewegung ausführt.

2. Verfahren nach Patentanspruch 1, dadurch gekennzeichnet, daß dem Zuführorgan (14) von einem Motor (17) über einen Hauptkurbeltrieb (21) eine sinusförmige Bewegung erteilt wird, wobei der sinusförmige Bewegungsablauf durch einen Zusatzkurbeltrieb (23, 24) gestört wird.

3. Verfahren nach einem der vorangehenden Patentansprüche, dadurch gekennzeichnet, daß eine Abfühlvorrichtung (6, 7) ein Festhaltemittel (31) zum Blockieren der ersten Erzeugnisse in der Zuführöffnung (15) steuert, wobei ein erstes Erzeugnis (2) durch das Festhaltemittel freigegeben wird, wenn sich ein zweites Erzeugnis (1) unterhalb des Zuführorgans (14) befindet.

4. Vorrichtung zur Durchführung des Verfahrens nach Patentanspruch 1 zum automatischen Zubringen von ersten Erzeugnissen (2) auf von einem Transportmittel (3) transportierte zweite Erzeugnisse (1) mit einem Wände (11, 12) aufweisenden Behälter (10) für die Speicherung der ersten Erzeugnisse (2), ein unterhalb des Behälters angeordnetes, den Boden desselben bildendes, mit einer Zuführöffnung (15) versehenes Zuführorgan (14) sowie Antriebsmittel (17, 18, 20, 21, 22, 23, 24, 25, 25, 26, 27, 28) zum Versetzen des Zuführorgans (14) in eine Drehbewegung, dadurch gekennzeichnet, daß die Antriebsmittel erste und zweite Organe umfassen, welche bewirken, daß die Zuführöffnung (15) zwischen den Wänden (11, 12) des Behälters (10) eine gestörte sinusförmige Bewegung ausführt.

5. Vorrichtung nach Patentanspruch 4, dadurch gekennzeichnet, daß das Zuführorgan (14) zylindersektorförmig ausgebildet ist.

6. Vorrichtung nach Patentanspruch 4 oder 5, dadurch gekennzeichnet, daß das erste Organ als ein durch einen von einem Motor (17) angetriebenen, mit dem Zuführorgan (14) zwangsläufig verbundenen Hauptkurbeltrieb (21) und das zweite Organ als Zusatzkurbeltrieb (23, 24) ausgebildet ist.

7. Vorrichtung nach einem der Patentansprüche 4, 5 oder 6, dadurch gekennzeichnet, daß die Wände (11, 12) des als Trichter ausgebildeten Behälters (10) gefedert angeordnet sind.

8. Vorrichtung nach einem der Patentansprüche 4—7, gekennzeichnet durch ein im Bereich der Zuführöffnung (15) angeordnetes Festhaltemittel (31) für die ersten Erzeugnisse (2).

9. Anwendung des Verfahrens nach Patentanspruch 1 zum Zubringen von Schokoladestäbchen auf Teigblättchen.

## Claims

1. Process for automatically feeding first products (2) onto second products (1) transported by conveyor means (3), the first products (2) being supplied to a receptacle (10) disposed above the conveyor means (3), and a feeder part (14) being provided beneath the receptacle (10), forming the bottom thereof and furnished with a feed opening (15), the said part (14) being set in motion by drive means (17, 18, 20, 21, 22, 23, 24, 25, 26, 27, 28), the feed opening (15) being moved back and forth between walls (11, 12) of the receptacle (10), and the first products (2) being conveyed from the receptacle (10) through the feed opening (15) onto the second products (1), characterized in that the feeder part carries out a perturbed sinusoidal movement.

2. Process according to patent claim 1, characterized in that a sinusoidal movement is imparted to the feeder part (14) by a main motor (17) vis a main crank assembly (21), the sinusoidal course of movement being perturbed by means of a supplementary crank assembly (23, 24).

3. Process according to one of the perceding patent claims, characterized in that a sensing device (6, 7) controls a retaining means (31) for blocking the first products in the feed opening (15), a first product (2) being released by the retaining means when a second product (1) is situated beneath the feeder part (4).

4. Device for carrying out the process according to patent claim 1 for automatically feeding first products (2) onto second products (1) transported by conveyor means (3), having a receptacle (10), including walls (11, 12), for storage of the first products (2), a feeder part (14) disposed beneath the receptacle, forming the bottom thereof, and provided with a feed opening (15), as well as drive means (17, 18, 20, 21, 22, 23, 24, 25, 26, 27, 28) for setting the feeder part (14) in rotational motion, characterized in that the drive means comprise first and second parts which cause the feed opening (15) to carry out a perturbed sinusoidal movement between the walls (11, 12) of the receptacle (10).

5. Device according to patent claim 4, characterized in that the feeder part (14) is formed in cylindrical-sector shape.

6. Device according to patent claim 4 or 5, characterized in that the first part is formed as a main crank assembly positively connected to the feeder part (14) and driven by a motor (17), and the second part ist formed as a supplementary crank assembly (23, 24).

7. Device according to patent claim 4, 5, or 6, characterized in that the walls (11, 12) of the receptacle (10) formed as a hopper are disposed elastically.

8. Device according to one of the patent claims 4—7, characterized by a retaining means (31) for the first products (2) disposed in the region of the feed opening (15).

9. Application of the process according to patent claim 1 for conveying small rods of chocolate onto small sheets of dough.

## Revendications

1. Procédé pour alimenter automatiquement en premiers produits (2) des secondes produits (1) transportés sur des moyens de transport (3), les premiers produits (1) étant amenés dans un récipient (10) disposé au-dessus des moyens de transport (3), un organe de délivrance (14) étant prévu au-dessous de ce récipient (10) pour en former le fond et étant muni d'une ouverture de délivrance (15), le dit organe (14) étant mis en mouvement par des moyens d'entraînement (17, 18, 20, 21, 22, 23, 24, 25, 26, 27, 28) de façon que la dite ouverture de délivrance (15) se déplace en va-et-vient entre les parois (11, 12) du récipient (10) et que les premiers produits (2) soient conduits du récipient (10), par l'ouverture de délivrance (15), sur les deuxièmes produits (1), caractérisé en ce que l'organe de délivrance (14) effectue un mouvement sinusoïdal perturbé.

2. Procédé selon la revendication 1, caractérisé en ce qu'un mouvement sinusoïdal est appliqué à l'organe de délivrance (14) depuis un moteur (17) par un mobile à excentrique principal (21), le mouvement d'évolution sinusoïdale étant perturbé par un mobile à excentrique complémentaire (23, 24).

3. Procédé selon une des revendications précédentes, caractérisé en ce qu'un dispositif senseur (6, 7) commande des moyens de retenue (31) pour bloquer le premier produit dans l'ouverture de délivrance (15), un premier produit (2) étant libéré par les moyens de retenue lorsqu'un second produit (1) se trouve en dessous de l'organe de délivrance (14).

4. Dispositif pour la mise en oeuvre du procédé en premiers produits (2) des seconds produits (1) transportés sur des moyens de transport (3), comprenant un récipient (10), présentant des parois (11, 12) pour le stockage des premiers produits (2), un organe de délivrance (14) disposé au-dessous du récipient, formant le fond de celui-ci, étant muni d'une ouverture de délivrance (15), et des moyens d'entraînement (17, 18, 20, 21, 22, 23, 24, 25, 26, 27, 28) étant prévus pour décaler la position de l'organe de délivrance (14) selon un mouvement rotatif, caractérisé en ce que les moyens d'entraînement comprennent un premier et un second organes qui interviennent de façon que l'ouverture de délivrance (15) effectue un mouvement sinusoïdal perturbé entre les parois (11, 12) du récipient (10).

5. Dispositif selon la revendication 4, caractérisé en ce que l'organe de délivrance (14) est formé avec la configuration d'un secteur de cylindre.

6. Dispositif selon la revendication 4 ou 5, caractérisé en ce que le premier organe est constitué en tant qu'un mobile à excentrique principal (21) entraîné par un moteur (17) et relié de façon impérative à l'organe de délivrance (14), le second organe étant constitué en tant que mobile à excentrique complémentaire (23, 24).

7. Dispositif selon une des revendications 4, 5 ou 6, caractérisé en ce que les parois (11, 12) du récipient (10) constitué en tant que trémie sont agencées de façon élastique.

8. Dispositif selon une des revendications 4—7, caractérisé par des moyens de retenue (31) disposés dans le domaine de l'ouverture de délivrance (15) pour retenir les premiers produits (2).

9. Application du procédé selon la revendication 1 pour la délivrance de bâtonnets de chocolat sur des petites feuilles de pâte.

## FIG. 1

# FIG. 2

# FIG. 3

FIG. 4

11
2
14
15
12
30

FIG. 5

11
14
2
12
15
30

FIG. 6

FIG. 7

# FIG. 8

AUFNAHMESEKTOR- MITTELAGE

50

B

17

A

1 UMDREHUNG DER HAUPTKURBEL

AUSSCHLAGBREITE DER
UNGESTÖRTEN SINUSBEWEGUNG

0°    180°    360°

0 060 370